# EUROPÄISCHE PATENTSCHRIFT

(11) **EP 1 828 631 B1**
(45) Veröffentlichungstag und Bekanntmachung des Hinweises auf die Patenterteilung: **28.05.2008**
(21) Anmeldenummer: 04804127.1
(22) Anmeldetag: 21.12.2004
(51) Int. Cl.: F16D 3/84

(54) **SYSTEM ZUR BEFESTIGUNG EINES FALTENBALGS AUF EINEM BAUTEIL MIT MINDESTENS EINEM LOBEN BEREICH**
SYSTEM FOR FIXING A BELLOWS-TYPE DEVICE TO A PART COMPRISING AT LEAST ONE LOBED AREA
SYSTEME POUR FIXER UN SOUFFLET SUR UN ELEMENT COMPRENANT AU MOINS UNE PARTIE A LOBES

(43) Veröffentlichungstag der Anmeldung: 05.09.2007
(73) Patentinhaber: GKN Driveline International GmbH, 53797 Lohmar (DE)
(72) Erfinder: DEISINGER, Markus, 53721 Siegburg (DE); WETTE, Joachim, 53773 Hennef (DE)
(74) Vertreter: Maxton Langmaack & Partner
(86) Internationale Anmeldenummer: PCT/EP2004/014529
(87) Internationale Veröffentlichungsnummer: WO 2006/066603

(56) Entgegenhaltungen:
- EP-A- 0 809 034
- EP-A- 0 990 810
- WO-A-20/04104438
- US-A- 5 529 538
- US-A1- 2002 134 447

## Beschreibung

Die vorliegende Erfindung betrifft ein System zur Befestigung eines Faltenbalgs mit mindestens einem Bundbereich und einem Faltenbereich auf einem Bauteil mit mindestens einem loben Bereich, umfassend mindestens ein Adaptermittel und mindestens ein Befestigungselement, sowie weiterhin ein entsprechendes Adaptermittel und einen entsprechenden Faltenbalg mit mindestens einem Adaptermittel und mindestens einem Befestigungselement.

Systeme der erfindungsgemäßen Art dienen dazu, Gelenkbauteile insbesondere im Antriebsstrang von Kraftfahrzeugen abzudichten. Gleichlaufgelenke weisen dabei nach dem Stand der Technik üblicherweise auf ihrem Gelenkaußenteil drei am Umfang angeordnete radiale Vertiefungen auf. Die hierdurch geschaffene Außenkontur wird als trilobeförmig angesprochen, und man spricht hier allgemein von triloben Gleichlaufgelenken. Aufgabe von Systemen der eingangs genannten Art ist es nun, den Gelenkbereich abzudichten, um einerseits das Eindringen von Schmutz und Feuchtigkeit zu verhindern, andererseits, um ein Austreten der Fettfüllung des Gelenkbauteils zu vermeiden.

Die Abdichtung erfolgt nach dem Stand der Technik derart, dass der Bundbereich eines Faltenbalgs der triloben Außenkontur des Gelenkgehäuses durch Vorsehung von Materialverdickungen an den entsprechenden Stellen ausgebildet ist. Die Verdickungen dienen somit dazu, die Radiusdifferenzen in der triloben Außenkontur des Gelenkbauteils auszugleichen, so dass zur Befestigung des Faltenbalgs insbesondere kreisförmige Befestigungselemente wie Klemmschellen oder Spannbänder verwendet werden können.

Eine hierzu alternative Ausbildung schlagen EP 1 384 908 A2, US 5 529 538 A und EP 0 389 099 A1 vor. Dabei werden die loben Bereiche mit entsprechend der triloben Außenkontur des Gelenkgehäuses angepassten Ausgleichsstücken, in aller Regel drei, gefüllt, wobei der Bundbereich des Faltenbalgs selbst unmittelbar der triloben Außenkontur des Gelenkgehäuses angeformt ist. Auch hierdurch ist es wiederum ermöglicht, mit einer kreisförmig ausgebildeten Klemmschelle oder einem entsprechenden Spannmittel den Faltenbalg dicht auf dem Gelenkgehäuse zu befestigen. Die vorliegende Erfindung geht dabei insbesondere von einem Stand der Technik gemäß der US 5 529 538 A aus.

Nachteilig an diesen aus dem Stand der Technik bekannten Systemen ist jedoch, dass aufgrund des nur gering vorhandenen Platzes die Montage des Befestigungselements zur Befestigung des Faltenbalgs auf dem Gelenkbauteil erschwert ist und daher aus Kostengesichtspunkten die Montage relativ aufwändig ist.

Es ist daher Aufgabe der vorliegenden Erfindung, ein System zur Verfügung zu stellen, mittels welchem die Montage von Faltenbälgen auf Gelenkbauteilen mit loben Bereichen, insbesondere Gelenkgehäusen mit trilober Außenkontur, schneller und einfacher erfolgen kann.

Diese Aufgabe wird erfindungsgemäß gelöst durch ein System zur Befestigung eines Faltenbalgs mit mindestens einem Bundbereich und einem Faltenbereich auf einem Bauteil mit mindestens einem loben Bereich, umfassend mindestens ein Adaptermittel und mindestens ein Befestigungselement, wobei das Adaptermittel in einem dem Faltenbereich entgegengesetzten Bereich mindestens ein beabstandetes Positionierelement, umfassend mindestens ein Haltemittel für das Befestigungselement, aufweist. Hierdurch wird ein System zur Verfügung gestellt, welches vorteilhafterweise ein auf dem Adaptermittel vormontiertes Befestigungselement aufweist. Das Positionierelement übernimmt dabei die Aufgabe, über mindestens eine Anlagefläche eine axiale Positionierung des Befestigungselements zur Verfügung zu stellen, wohingegen das Haltemittel eine radiale Fixierung auf der dem Bundbereich zugewandten und/oder abgewandten Seite und gegebenenfalls zusätzlich eine weitere axiale Fixierung auf der dem Faltenbereich zugewandten Seite des Faltenbalgs zur Verfügung stellt.

Durch die Anordnung des Positionierelements mit dem Haltemittel an dem Adaptermittel wird in besonders vorteilhafter Weise ermöglicht, das Adaptermittel mit Positionierelement mitsamt dem Haltemittel im Spritzgussverfahren herzustellen, so dass diese mit einer höheren Präzision ausgeführt werden können. Dies ist im Vergleich zu einer möglichen Fixierung von Befestigungselementen im Bundbereich des Faltenbalgs selbst von Vorteil, da durch die dann notwendigerweise vorzusehenden Haltemittel im Bundbereich des Faltenbalgs die Dichtungsfunktion des Faltenbalgs beeinträchtigt sein kann.

Das Adaptermittel nach dem erfindungsgemäßen System kann einstückig ausgebildet sein, jedoch auch mehrstückig, und damit im Sinne der in der EP 0 389 099 A1 und der EP 1 384 908 A2 gezeigten Ausgleichsstücke. Jedes der Teile des Adaptermittels sollte dabei bevorzugt mindestens ein Positionierelement aufweisen, so dass durch das Befestigungselement, in aller Regel als Klemmschelle oder als Spannring ausgebildet, eine Vormontage des gesamten Systems erlangt wird. Dementsprechend kann der Bundbereich des Faltenbalgs der triloben Außenkontur des Gelenkgehäuses angepasst sein. Das Adaptermittel weist dann Materialverstärkungen in den loben Bereichen auf und umfasst vollständig den unmittelbar auf dem Gelenkgehäuse aufliegenden Bundbereich des Faltenbalgs. Alternativ kann auch vorgesehen sein, dass in den loben Bereichen das Adaptermittel derart ausgebildet ist, dass dieses einerseits Bereiche aufweist, welche zwischen dem Gelenkgehäuse und dem Faltenbalg angeordnet sind, in den loben Bereichen entsprechend jedoch auch weitere Bereiche, welche zwischen Faltenbalg und Befestigungselement angeordnet sind. Hierdurch kann eine radiale Versteifung des gesamten Systems erzielt werden.

Bevorzugt ist jedoch ein System, bei welchem der Bundbereich des Faltenbalgs ohne Materialverstärkungen in den loben Bereichen des Gelenkgehäuses ausgeführt ist, so dass die Radiusdifferenz im Wesentlichen durch das Adaptermittel ausgeglichen wird.

In einer bevorzugten Ausführungsform des erfindungsgemäßen Systems ist das Haltemittel unlösbar, insbesondere fest mit dem Befestigungselement verbunden, in einer weiter alternativen Ausführungsform des erfindungsgemäßen Systems ist das Haltemittel lösbar mit dem Befestigungselement verbunden. Bei der letztgenannten Ausführungsform kann beispielsweise vorgesehen sein, dass das Befestigungselement mit einer Vorspannung im Haltemittel vormontiert ist, beispielsweise wenn das Haltemittel ein in etwa L-förmiges Profil aufweist, wodurch unter Einschluss der Anlagefläche des Positionierelements, welches das Haltemittel trägt, eine in Umfangsrichtung gesehen U-förmiges Profil erzielt wird, so dass zwischen der Anlagefläche des Positionierelements und der dieser entgegengesetzten Fläche des kurzen Schenkels des L-profilförmigen Haltemittels das Befestigungselement mit Vorspannung angeordnet werden kann. Hier kann durch die Wahl des richtigen Kunststoffmaterials mit entsprechenden Elastizitäten und Härten eine sichere Vormontage des Befestigungselements auf dem Adaptermittel erzielt werden.

Eine unlösbare, aber auch lösbare Verbindung des Haltemittels mit dem Befestigungselement kann beispielsweise dadurch erzielt werden, dass bereits bei der Herstellung des Adaptermittels im Spritzgussverfahren das Befestigungselement in die Spritzgussform eingelegt und hierdurch eine Verbindung zwischen dem Haltemittel und dem Befestigungselement erzielt wird, gegebenenfalls auch unter Einsatz von Primem. Dabei kann das Befestigungselement zumindest teilweise, insbesondere jedoch bevorzugt vollständig, von Kunststoffmaterial umgeben sein. Weiterhin ist es auch möglich, das Haltemittel schlaufenartig auszubilden, so dass das Befestigungselement durch die gebildeten Schlaufen geführt wird und gegebenenfalls nach Schließung desselben fest mit dem Adaptermittel verbunden ist. Bevorzugt weist das Haltemittel in Umfangsrichtung des Bundbereiches des Faltenbalges gesehen einen L-förmigen Querschnitt auf.

Vorzugsweise ist das Positionierelement armartig ausgebildet. Hierdurch ist auf einfache Art und Weise eine Beabstandung von dem in seiner dem Befestigungselement zugewandten Außenkontur kreisförmig ausgebildeten Adaptermittel ermöglicht. Der Arm kann dabei beispielsweise in Umfangsrichtung des Adaptermittels oder des Bundbereichs des Faltenbalgs gesehen einen L-förmigen Querschnitt aufweisen mit einem ersten Schenkel und einem zweiten Schenkel, wobei der zweite Schenkel dann in etwa parallel zur Umfangsfläche des Adaptermittels ausgebildet ist und eine Anlagefläche zur axialen Positionierung des Befestigungselements auf der dem Faltenbereich abgewandten Seite des Bundbereichs zur Verfügung stellt. Der Bundbereich des Faltenbalgs selbst kann im Übrigen jegliche aus dem Stand der Technik bekannte Ausbildung aufweisen, insbesondere kann dieser - vom Boden einer im Bundbereich angeordneten Ringnut ausgehend - mindestens einen oder zwei Ringspalte und einen oder zwei entsprechend ausgebildete Ringwulste im Bereich der Ringspalte aufweisen.

Das Positionselement kann in einer Ausführungsform des erfindungsgemäßen Systems umlaufend auf dem Adaptermittel, und insbesondere einstückig mit diesem ausgebildet, angeordnet sein. In einer alternativen Ausführungsform sind jedoch mindestens drei oder bis zu sechs Positionselemente auf dem Adaptermittel angeordnet, wobei diese weiter bevorzugt insbesondere in den Bereichen mit trilober Außenkontur des Gelenkgehäuses angeordnet sind und dort weiter bevorzugt insbesondere genau in denjenigen Bereichen, welche die größten Materialstärken, insbesondere des Adaptermittels, aufweisen.

Vorzugsweise ist das Positionierelement und/oder das Haltemittel aus einem Kunststoffmaterial hergestellt. Soll das Positionierelement und/oder das Haltemittel biegsam und/oder weich ausgebildet sein, werden als Kunststoff beispielsweise Polypropylen, thermoplastische Elastomere (TPE), insbesondere auch Polyetherester, wie Polyterephthalsäureester, Polymerlegierungen wie TPV oder wie Polypropylen / EPDM / StyrolButadien-Kautschuke, oder compoundierte Materialien wie thermoplastische Ether-Ester-Elastomere (TEEE), Gummi und gummiartige Kunststoffe wie Ethylen / Propylen-Dien-Terpolymere (EPDM) oder Mischungen dieser eingesetzt, ist eine spröde Ausbildung gewünscht, welche ein Wegbrechen ermöglicht, kann beispielsweise ein Polyamid eingesetzt werden. So kann beispielsweise bei einer Aufnahme des Befestigungselements in einem schlaufenartig ausgebildeten Haltemittel bei Festziehen des Befestigungselements das Haltemittel vom Positionierelement wegbrechen, wodurch eine vollflächige Anlage des Befestigungselements auf dem Adaptermittel bzw. dem Bundbereich des Faltenbalgs erzielt wird. Hierdurch wird eine gleichmäßige Dichtwirkung erhalten. Ist jedoch beispielsweise das Befestigungselement derart mit dem Haltemittel verbunden, dass dieses auf der dem Bundbereich bzw. dem Adaptermittel zugewandten Seite fest mit dem Haltemittel aus einem Kunststoffmaterial verbunden ist, so kommt das Befestigungselement zusammen mit dem mit diesem fest verbundenen Teil des Haltemittels bei einem Abbrechen vom Positionierelement zur Anlage an dem Adaptermittel, bzw. dem Bundbereich des Faltenbalgs, wodurch insbesondere vorteilhafterweise bei einer Anordnung von drei oder auch sechs Positionierelementen in den loben Bereichen des Gelenkbauteils eine Druckerhöhung und damit eine Erhöhung der Dichtwirkung durch das zusätzliche Haltemittel aus Kunststoff erzielt wird. Hierdurch werden die Nachteile hoher Materialstärken im Bereich der loben Bereiche des Adaptermittels und die damit einhergehenden möglicherweise auftretenden Dichtigkeitsprobleme ausgeglichen. Bei den vorgenannten Ausbildungen ist es insbesondere vorteilhaft, wenn das Positionierelement eine Sollbruchstelle aufweist, so dass das Haltemittel zumindest teilweise, bevorzugt vollständig, beim Anziehen des Befestigungselements gezielt und sicher wegbricht. Dabei kann auch vorgesehen sein, dass ein Teil des Positionierelements zusammen mit dem Haltemittel wegbricht. Eine derartige Sollbruchstelle kann beispielsweise durch Vorsehung einer Einkerbung oder jede sonstige Art der Verringerung der Materialstärke im Positionierelement, insbesondere beim Übergang zum Haltemittel, erzielt werden.

In einer bevorzugten Ausführungsform ist das Haltemittel derart ausgebildet, dass es einen U-förmigen Querschnitt - in Umfangsrichtung des Bundbereichs des Faltenbalgs bzw. des Adaptermittels gesehen - aufweist, wobei das U mit seiner offenen Seite auf das Positionierelement hinweist. Hierdurch ist eine Aufnahme des Befestigungselements in einer Schlaufe ermöglicht, so dass dieses dann im Bereich des Positionierelements vollständig von Kunststoff umgeben ist. Dabei kann das Befestigungselement fest von dem Kunststoff umgeben sein. Die Schlaufe wird dann durch die Anlagefläche des Positionierelements und das U-förmig ausgebildete Haltemittel gebildet. Alternativ ist vorgesehen, dass das Haltemittel als stegförmiger Vorsprung, in Umfangsrichtung des Bundbereichs des Faltenbalgs bzw. des Adaptermittels gesehen, am Positionierelement ausgebildet ist. Hierdurch wird von dem Haltemittel eine radiale Fixierung des Befestigungselements nach innen erzielt, wohingegen eine axiale Positionierung des Befestigungselements durch die Anlagefläche, gebildet vom Positionierelement, erzielt wird. Der Halt des Befestigungselements durch das Haltemittel kann dann erzielt werden durch eine unlösbare, feste Verbindung mit dem als stegförmiger Vorsprung ausgebildeten Haltemittel, andererseits kann in einer alternativen Ausführungsform das Befestigungselement lösbar befestigt sein mit dem System, wobei die weitere axiale Positionierung auf der der Anlagefläche des Positionierelements entgegengesetzten Seite durch die Ringnutflanke der Ringnut, angeordnet im Bundbereich des Faltenbalgs, gebildet wird, wobei das Befestigungselement dann mittels einer Vorspannung gehalten ist. Alternativ kann die der Anlagefläche des Positionierelements gegenüberliegende, zur weiteren axialen Fixierung führende und für den Halt des Befestigungselements notwendige Gegenfläche am Außenumfang des Adaptermittels ausgebildet sein, insbesondere bei jener Ausführungsform des erfindungsgemäßen Systems, bei welcher der Bundbereich des Faltenbalgs unmittelbar der triloben Außenkontur des Gelenkgehäuses angeformt ist und an diesem anliegt.

In einer weiter bevorzugten Ausführungsform umgreift das Adaptermittel mit dem armartigen Positionierelement auf der dem Faltenbereich entgegengesetzten Seite den Bundbereich des Faltenbalgs. Das Positionierelement ist dabei vorzugsweise an der faltenabseitigen Flanke des Adaptermittels angeordnet. Bei dieser Ausführungsform werden die Radiusdifferenzen in den loben Bereichen des Gelenkgehäuses durch entsprechende Materialanhäufungen im Adaptermittel zumindest teilweise ausgeglichen. Ist, wie alternativ vorgesehen sein kann, das Adaptermittel zumindest teilweise zwischen dem Bundbereich des Faltenbalgs und dem Befestigungselement angeordnet, so ergibt sich hierdurch vorteilhafterweise eine Erhöhung der radialen Steifigkeit des Adaptermittels, da durch die zusätzliche Trennfläche in der Struktur des Adaptermittels dieses dichter ausgeführt werden kann. Hierdurch können insbesondere weniger Kühlstifte im Adaptermittel angeordnet werden.

Des Weiteren betrifft die vorliegende Erfindung ein Adaptermittel mit den vorstehend genannten Merkmalen sowie einen Faltenbalg mit mindestens einem Adaptermittel und mindestens einem Befestigungselement. Hierdurch wird ein vormontiertes Gesamtsystem zur Verfügung gestellt, wodurch eine schnelle und kostengünstige Montage von Faltenbälgen insbesondere auf triloben Gleichlaufgelenken ermöglicht ist.

Diese und weitere Vorteile werden anhand der folgenden Figuren näher erläutert. Es zeigen im Einzelnen:
- Fig. 1:: eine Schnittansicht des erfindungsgemäßen Systems, montiert auf einem Gelenkbauteil, in einer ersten Ausführungsform;
- Fig. 2:: eine Teilschnittansicht des erfindungsgemäßen Systems, montiert auf einem Gelenkbauteil, in einer weiteren Ausführungsform;
- Fig. 3:: eine Schnittansicht entlang des Schnitts A - A der Fig. 1 des erfindungsgemäßen Systems;
- Fig. 4:: eine Schnittansicht entsprechend Fig. 3 des erfindungsgemäßen Systems in einer weiteren Ausführungsform mit einem der triloben Außenkontur des Gelenkbauteils angepassten Bundbereich eines Faltenbalgs;
- Fig. 5:: eine Schnittansicht entsprechend Fig. 3 des erfindungsgemäßen Systems in einer weiteren Ausführungsform mit einem radial verstreiften Adaptermittel;
- Fig. 6:: eine Schnittansicht des erfindungsgemäßen Systems, montiert auf dem Gelenkbauteil, in einer weiteren Ausführungsform; und
- Fig. 7:: eine perspektivische Ansicht eines Adaptermittels gemäß der Ausführungsform nach Fig. 6.

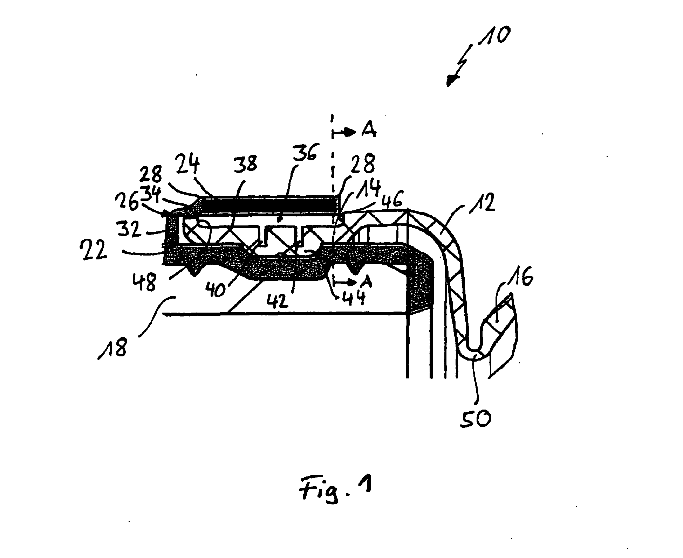

Fig. 1 zeigt ein insgesamt mit dem Bezugszeichen 10 bezeichnetes erfindungsgemäßes System, bestehend aus einem Adaptermittel 22 und einem Befestigungselement 24, beispielsweise einem Spannband, im vormontierten Zustand auf einem triloben Gleichlaufgelenk 18 mit einem Faltenbalg 12. Der Faltenbalg 12 weist einen Faltenbereich 16 mit einer ersten Falte 50 und weiteren, hier nicht näher gezeigten Falten sowie einen Bundbereich 14 auf. Der Bundbereich 14 umfasst eine Ringnut 36 mit einem Boden 38, welcher zwei umlaufende Ringspalte 40 und 42 aufweist. Im Bereich der Ringspalte 40 und 42 ist ein Ringwulst 44 angeordnet.

Das Adaptermittel 22 passt sich in seiner Kontur der ringnutabseitigen Außenkontur des Bundbereichs 14 des Faltenbalgs 12 an. Das Adaptermittel 22 weist an seiner faltenabseitigen Flanke angeordnet ein Positionierelement 26 auf, gebildet aus einem ersten Schenkel 32 und einem zweiten Schenkel 34. Der zweite Schenkel 34 weist eine Anlagefläche 28 auf, an welcher das Befestigungselement 24 axial positioniert ist. Das Befestigungselement 24 ist in der in Fig. 1 gezeigten Ausführungsform fest verbunden mit dem Haltemittel 28, welches als U-förmig ausgebildetes Profil, gesehen in Umfangsrichtung des Adaptermittels 22, ausgebildet ist. Das Spannband 24 ist somit vollständig von dem Kunststoffmaterial, aus welchem das Haltemittel 28 und das Positionierelement 26 mit seiner Anlagefläche 28 gebildet ist, umgeben. Die Positionierung des Befestigungselements 24 erfolgt derart, dass dieses durch das Positionierelement 26 mitsamt Haltemittel 28 im Bereich der Ringnut 36 des Bundbereichs 14 des Faltenbalgs 12 positioniert ist.

Wird nun das Befestigungselement 24 angezogen, kann - muss aber nicht - das Haltemittel 28 mitsamt dem Befestigungselement 24 vom Positionierelement 26 abbrechen und in der Ringnut 36 des Bundbereichs 14 des Faltenbalgs 12 aufgenommen werden. Dabei gelangt Kunststoffmaterial des U-förmig ausgebildeten Haltemittels 28 in den Bereich zwischen Boden 38 und Befestigungselement 24, so dass bei einer Anordnung von Positionierelementen 26 mit Haltemitteln 28 in den loben Bereichen, in welchen das Adaptermittel 22 eine Materialanhäufung anweist, eine gezielte Druckerhöhung erfolgt, wodurch die Dichtigkeitswirkung verbessert wird. Zusätzlich kann das Positionierelement 26 zur Sicherstellung eines Wegbrechens des Befestigungselements 24 samt dem Haltemittel 28 im Bereich des Übergangs zum Haltemittel 28 kurz vor der Anlagefläche 28 mit einer Kerbe versehen werden. Die Anlagefläche 28 mit einem Restteil des Positionierelements 26 kann somit zusammen mit dem Befestigungselement 24 und dem Haltemittel 28 wegbrechen.

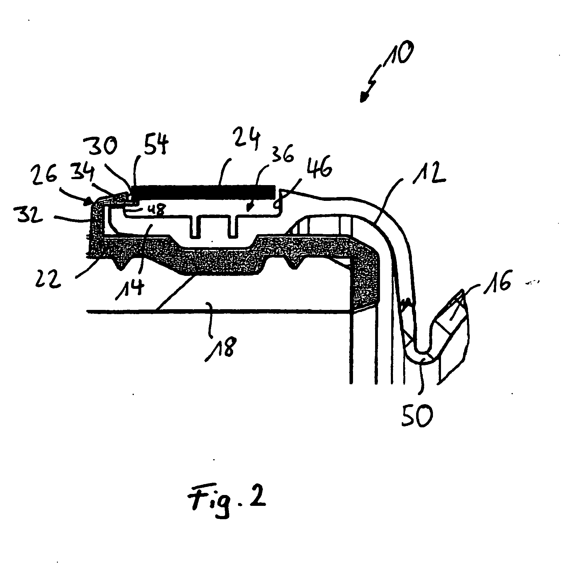

Fig. 2 zeigt eine alternative Ausführungsform zu dem in Fig. 1 gezeigten System 10 in einer Teilschnittansicht. Auch hier ist wiederum das System 10 im vormontierten Zustand gezeigt und besteht aus einem Befestigungselement 24 und einem Adaptermittel 22, wobei das System 10 bereits auf dem Gelenkbauteil 18 zusammen mit dem Faltenbalg 12 montiert ist. Das Positionierelement 26 ist hier - in Umfangsrichtung des Adaptermittels 22 gesehen - etwa L-profilförmig und somit armartig ausgebildet mit einem ersten Schenkel 32 und einem zweiten Schenkel 34, wobei der zweite Schenkel 34 die Anlagefläche 30 zur axialen Positionierung des Befestigungselements 24 auf der faltenabseitigen Seite des Adaptermittels 22 sicherstellt. Das Haltemittel 28 ist allein aus dem stegförmig am Positionselement 26 angeordneten Vorsprung 54 gebildet. Die Vormontage des erfindungsgemäßen Systems 10 erfolgt dergestalt, dass das Befestigungselement 24 axial von der faltenseitigen Ringnutflanke 46 und der Anlagefläche 30 des Positionierelements 26 einerseits positioniert und andererseits durch Einstellung einer Vorspannung durch entsprechende Dimensionierung des Systems, wobei auch unterschiedliche Kunststoffmaterialien zum Einsatz kommen können, vormontiert gehalten ist. Die radiale Fixierung erfolgt durch den stegförmigen Vorsprung 24, welcher das Haltemittel 28 bildet. Bei Anziehen des Befestigungselements 24 kann der stegförmige Vorsprung 24 einfach wegbrechen, so dass das Befestigungselement 24 zwischen den Ringnutflanken 46 und 48 in die Ringnut 36 bündig eingreift. Dabei gelangt im Unterschied zu der in Fig. 1 Ringnut 36 bündig eingreift. Dabei gelangt im Unterschied zu der in Fig. 1 gezeigten Ausführungsform des erfindungsgemäßen Systems 10 kein Kunststoffmaterial des Haltemittels 28 in den Bereich zwischen dem Boden der Ringnut 36 und dem Befestigungselement 24.

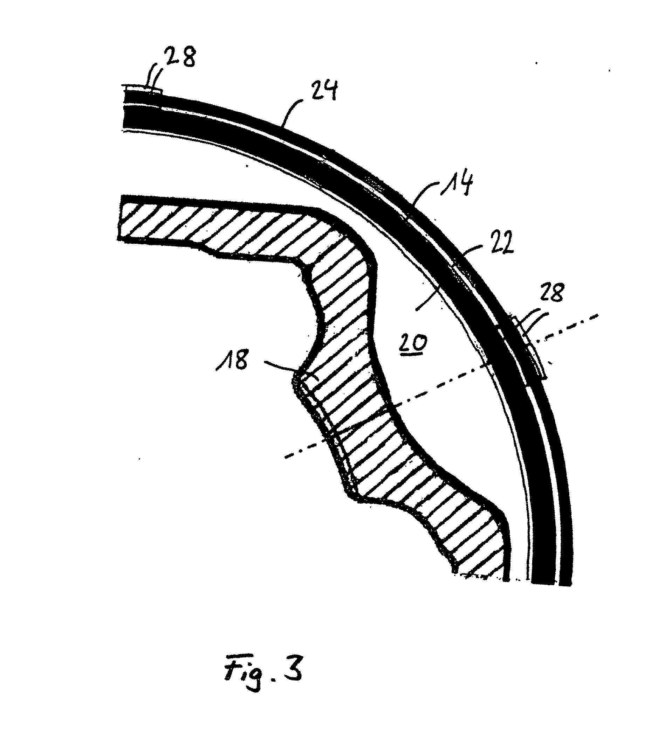

Fig. 3 zeigt eine Schnittansicht entlang etwa des Schnitts A - A der Fig. 1 durch die dort gezeigte Ausführungsform, wobei insbesondere die Positionierung des Haltemittels 28 in einem loben Bereich 20, gebildet durch das Gelenkbauteil 18 und ausgefüllt durch das Adaptermittel 22, verdeutlicht ist. Das Haltemittel 28 umgreift auf beiden Seiten das Befestigungselement 24, wobei das hier nicht näher gezeigte Positionierelement 26 wiederum den Bundbereich 14 des nicht weiter gezeigten Faltenbalgs 12 umgreift. Bei der in Fig. 3 gezeigten Ausführungsform ist auf der rechten Seite ein weiteres Haltemittel 28 gezeigt, diesmal jedoch nicht in einem loben Bereich des Gelenkbauteils 18 angeordnet. Idealerweise sollten bei dem erfindungsgemäßen System drei bis sechs Positionierelemente 26 mit den entsprechenden Haltemitteln 28 vorgesehen sein, um eine ausreichende Dichtwirkung zu erzielen.

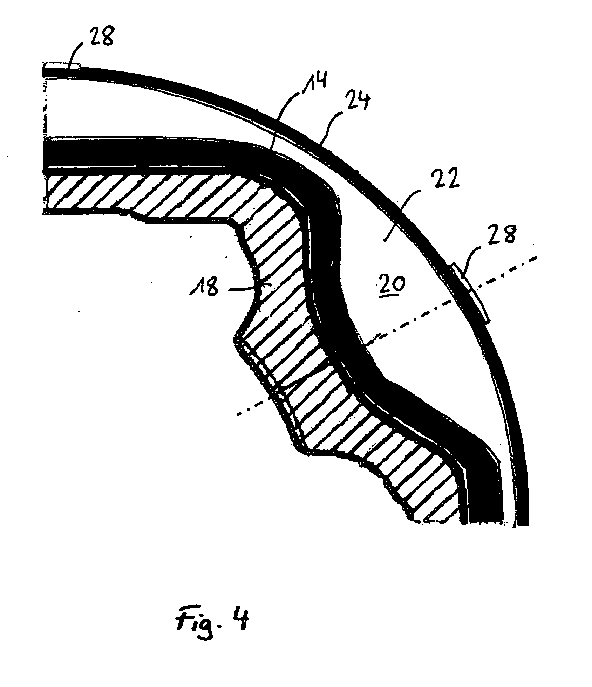

Fig. 4 zeigt eine der in Fig. 3 gezeigten Ansicht entsprechende Schnittansicht einer weiteren Ausführungsform der vorliegenden Erfindung, wobei hier der Bundbereich 14 des nicht näher gezeigten Faltenbalgs 12 der triloben Außenkontur des Gelenkbauteils 18 unmittelbar angeformt ist. Hierdurch entstehen trilobe Bereiche 20, welche vollständig vom Adaptermittel 22 ausgefüllt werden. Das Adaptermittel 22 weist ein an einem nicht näher gezeigten Positionierelement 26 angeordnetes Haltemittel 28 auf, welches das Befestigungselement 24 umgreift und es somit radial nach außen fixiert. Die radiale Fixierung nach innen erfolgt durch die Umfangsfläche des Adaptermittels 22. Die radiale Fixierung auf der faltenabseitigen Seite des Adaptermittels erfolgt durch die hier nicht näher gezeigte Anlagefläche des Positionierelements 26, eine weitere Positionierung auf der dem hier nicht näher gezeigten Faltenbereich des Faltenbalgs 12 zugewandten Seite kann bei einer U-förmigen Ausbildung des Halteelement 28, in Umfangsrichtung des Adaptermittels 22 gesehen, erfolgen, dies ist jedoch nicht unbedingt vonnöten. Das Befestigungselement 24 kann mit dem Haltemittel 28 fest verbunden sein. Bei einer U-förmigen Ausführung des Haltemittels 28 - wie vorstehend beschrieben - kann dieses in der dann durch das Haltemittel 28 als auch durch die hier nicht gezeigte Anlagefläche des Positionierelements 26 gebildete Schlaufe aufgenommen sein, ohne fest mit dem Kunststoffmaterial verbunden zu sein.

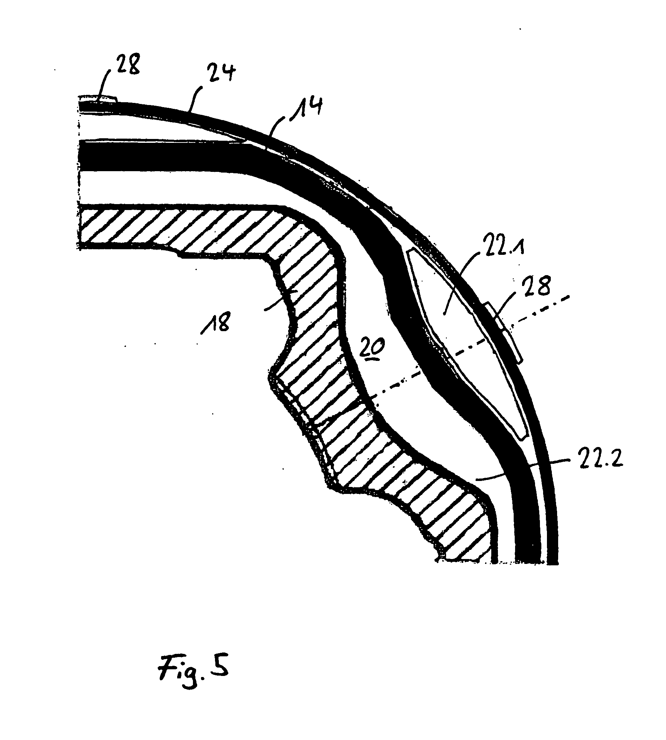

Fig. 5 zeigt eine weitere Ausführungsform in einer Schnittansicht entsprechend der Fig. 3, wobei hier ein Adaptermittel 22 gezeigt ist, welches eine radiale Versteifung aufweist. Hierbei ist der Bundbereich 14 des nicht näher gezeigten Faltenbalgs 12 zwar der triloben Außenkontur des Gelenkbauteils 18 nachempfunden, gleichwohl liegt der Bundbereich 14 nicht unmittelbar an dem Gelenkbauteil 18 an. Vielmehr liegt das Adaptermittel 22 mit dem Adaptermittelbereich 22.2 unmittelbar an der Außenkontur des Gelenkbauteils 18 an. Das Adaptermittel 22 weist weiterhin einen Adaptermittelbereich 22.1 auf, welcher zwischen Befestigungselement 24 und Bundbereich 14 des Faltenbalgs 12 angeordnet ist, und in welchem Bereich auch das Haltemittel 28 des nicht näher gezeigten Positionierelements 26 entsprechend der in Fig. 4 gezeigten Ausführungsform mit den dort genannten Alternativen angeordnet ist. Bei einer derartigen Ausführung des Adaptermittels 22 kann dieses dichter ausgeführt werden, so dass eine entsprechende Versteifung in den loben Bereichen 20 erzielbar ist.

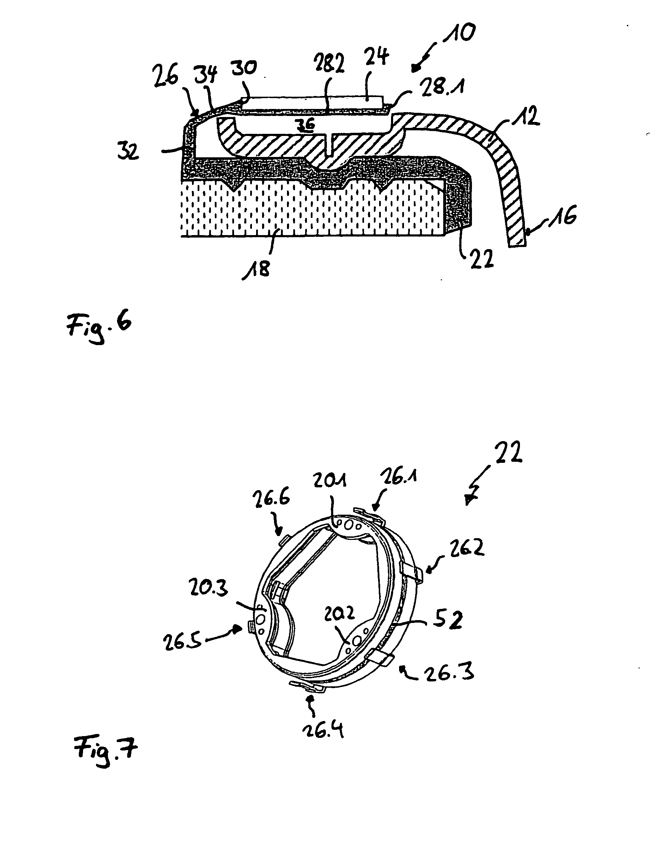

Fig. 6 zeigt eine weitere Ausführungsform des erfindungsgemäßen Systems 10, wobei das Halteelement 28 in Umfangsrichtung des Adaptermittels 22 gesehen einen in etwa L-förmigen Querschnitt aufweist, gebildet aus einem kurzen Schenkel 28.1 und einem langen Schenkel 28.2. Das System 10 ist montiert dargestellt mit einem Faltenbalg 12 mit einem Faltenbereich 16 (angedeutet) und einer Ringnut 36 auf einem Gelenkbauteil 18. Das Positionierelement 26 umfasst neben dem Haltemittel 28 einen ersten Schenkel 32 und einen zweiten Schenkel 34, wobei dieser eine Anlagefläche 30 für das Befestigungselement 24 zur Verfügung stellt. Eine weitere axiale Positionierung des Befestigungselementes 24 erfolgt durch die faltenabseitige Fläche des kurzen Schenkels 28.1, eine radiale Fixierung durch die ringnutabseitige Fläche des langen Schenkels 28.2 des Halteelementes 28.

Fig. 7 zeigt schließlich ein erfindungsgemäßes Adaptermittel in unmontiertem Zustand, wie dieses im Schnitt in Fig. 6 gezeigt ist. Insgesamt sechs Positionierelemente 26.1 bis 26.6 sind über die Umfangsfläche verteilt angeordnet, wobei drei (26.1, 26.3, 26.5) in etwa mittig zu den loben Bereichen 20.1, 20.2 und 20.3 angeordnet sind. Die weiteren drei Positionierelemente 26.2, 26.4 und 26.6 sind in etwa mittig in den unloben Bereichen angeordnet. Eine Ringnut 52, in welche ein Ringwulst eines Faltenbalges eingreifen kann, ist über die gesamte Umfangsfläche des Adaptermittels 22 angeordnet. In den loben Bereichen 20.1, 20.2 und 20.3 ist das Adaptermittel bevorzugt nicht massiv, sondern insbesondere mit Kammern ausgeführt, während insbesondere in den nichtloben Bereichen eine massive Ausbildung vorgesehen sein kann.

## Patentansprüche

1. System (10) zur Befestigung eines Faltenbalgs (12) mit mindestens einem Bundbereich (14) und einem Faltenbereich (16) auf einem Bauteil (18) mit mindestens einem loben Bereich (20), umfassend mindestens ein Adaptermittel (22) und mindestens ein Befestigungselement (24), **dadurch gekennzeichnet, dass** das Adaptermittel (22) in einem dem Faltenbereich (16) entgegengesetzten Bereich mindestens ein beabstandetes Positionierelement (26), umfassend wenigstens ein Haltemittel (28) für das Befestigungselement (24), aufweist.

2. System gemäß Anspruch 1, **dadurch gekennzeichnet, dass** das Positionierelement (26) armartig ausgebildet ist.

3. System gemäß einem der vorhergehenden Ansprüche, **dadurch gekennzeichnet, dass** das Haltemittel (28) fest mit dem Befestigungselement (24) verbunden ist.

4. System gemäß einem der Ansprüche 1 oder 2, **dadurch gekennzeichnet, dass** das Haltemittel (28) lösbar mit dem Befestigungselement (24) verbunden ist.

5. System gemäß einem der vorhergehenden Ansprüche, **dadurch gekennzeichnet, dass** das Adaptermittel (22) mit dem Positionierelement (26) im Spritzgussverfahren hergestellt ist.

6. System gemäß einem der vorhergehenden Ansprüche, **dadurch gekennzeichnet, dass** das Befestigungselement (24) zumindest teilweise durch das Haltemittel (28) von einem Kunststoffmaterial umgeben ist.

7. System gemäß einem der vorhergehenden Ansprüche, **dadurch gekennzeichnet, dass** ein Positionierelement (26) umlaufend auf dem Adaptermittel (22) angeordnet ist.

8. System gemäß einem der vorhergehenden Ansprüche, **dadurch gekennzeichnet, dass** das Adaptermittel (22) mindestens drei Positionierelemente (26) aufweist.

9. System gemäß einem der vorhergehenden Ansprüche, **dadurch gekennzeichnet, dass** das Positionierelement (26) aus einem harten Kunststoffmaterial hergestellt ist.

10. System gemäß einem der vorhergehenden Ansprüche, **dadurch gekennzeichnet, dass** das Haltemittel (28) als stegförmiger Vorsprung (54) in Umfangsrichtung des Bundbereichs (14) des Faltenbalgs (12) gesehen am Positionierelement (26) ausgebildet ist.

11. System gemäß einem der Ansprüche 1 bis 9, **dadurch gekennzeichnet, dass** das Halteelement (28) einen U-förmigen Querschnitt in Umfangsrichtung des Bundbereichs (14) des Faltenbalgs (12) gesehen aufweist.

12. System gemäß einem der vorhergehenden Ansprüche, **dadurch gekennzeichnet, dass** das Adaptermittel (22) mit dem armartigen Positionierelement (26) auf der dem Faltenbereich (16) entgegengesetzten Seite den Bundbereich (14) des Faltenbalgs (12) umgreift.

13. System gemäß einem der vorhergehenden Ansprüche, **dadurch gekennzeichnet, dass** das Adaptermittel (22) zumindest teilweise zwischen dem Bundbereich (14) des Faltenbalgs (12) und dem Befestigungselement (24) angeordnet ist.

14. Adaptermittel (22) zur Befestigung eines Faltenbalges (12) mit mindestens einem Bundbereich (14) und einem Faltebereich (16) auf einem Bauteil (18) mit mindestens einem loben Bereich (20), **dadurch gekennzeichnet, dass** das Adaptermittel (22) in einem dem Faltenbereich (16) entgegen gesetzten Bereich mindestens ein beabstandetes Positionierelement (26), umfassend wenigstens ein Haltemittel (28) für das Befestigungselement (24), aufweist.

15. Adaptermittel (22) gemäß Anspruch 14, **dadurch gekennzeichnet, dass** das Positionierelement (26) armartig ausgebildet ist.

16. Adaptermittel (22) gemäß einem der Ansprüche 14 oder 15, **dadurch gekennzeichnet, dass** das Haltemittel (28) fest mit dem Befestigungselement (24) verbunden ist.

17. Adaptermittel (22) gemäß einem der Ansprüche 14 bis 16, **dadurch gekennzeichnet, dass** das Haltemittel (28) lösbar mit dem Befestigungselement (24) verbunden ist.

18. Adaptermittel (22) gemäß einem der Ansprüche 14 bis 17, **dadurch gekennzeichnet, dass** das Adaptermittel (22) mit dem Positionierelement (26) im Spritzgussverfahren hergestellt ist.

19. Adaptermittel (22) gemäß einem der Ansprüche 14 bis 18, **dadurch gekennzeichnet, dass** das Befestigungselement (24) zumindest teilweise durch das Haltemittel (28) von einem Kunststoffmaterial umgeben ist.

20. Adaptermittel (22) gemäß einem der Ansprüche 14 bis 19, **dadurch gekennzeichnet, dass** ein Positionierelement (26) umlaufend auf dem Adaptermittel (22) angeordnet ist.

21. Adaptermittel (22) gemäß einem der Ansprüche 14 bis 20, **dadurch gekennzeichnet, dass** das Adaptermittel (22) mindestens drei Positionierelemente (26) aufweist.

22. Adaptermittel (22) gemäß einem der Ansprüche 14 bis 21, **dadurch gekennzeichnet, dass** das Positionierelement (26) aus einem Kunststoffmaterial hergestellt ist.

23. Adaptermittel (22) gemäß einem der Ansprüche 14 bis 22, **dadurch gekennzeichnet, dass** das Haltemittel (28) als stegförmiger Vorsprung (54) in Umfangsrichtung des Bundbereichs (14) des Faltenbalgs (12) gesehen am Positionierelement (26) ausgebildet ist.

24. Adaptermittel (22) gemäß einem der Ansprüche 14 bis 22, **dadurch gekennzeichnet, dass** das Halteelement (28) einen U-förmigen Querschnitt in Umfangsrichtung des Bundbereichs (14) des Faltenbalgs (12) gesehen aufweist.

25. Adaptermittel (22) gemäß einem der Ansprüche 14 bis 24, **dadurch gekennzeichnet, dass** das Adaptermittel (22) mit dem armartigen Positionierelement (26) auf der dem Faltenbereich (16) entgegengesetzten Seite den Bundbereich (14) des Faltenbalgs (12) umgreift.

26. Adaptermittel (22) gemäß einem der Ansprüche 14 bis 25, **dadurch gekennzeichnet, dass** das Adaptermittel (22) zumindest teilweise zwischen dem Bundbereich (14) des Faltenbalgs (12) und dem Befestigungselement (24) angeordnet ist.

27. System gemäß einem der Ansprüche 1 bis 13, **dadurch gekennzeichnet, dass** dieses weiterhin einen Faltenbalg (12) mit mindestens einem Bundbereich (14) und einem Faltenbereich (16) umfasst.

## Claims

1. A system (10) for fastening a bellows-type device (12) with at least one collar region (14) and one fold region (16) to a component (18) with at least one lobar region (20), comprising at least one adapter means (22) and at least one fastening element (24), **characterised in that** the adapter means (22) in a region opposite to the fold region (16) has at least one distanced positioning element (26), comprising at least one holding means (28) for the fastening element (24).

2. A system according to Claim 1, **characterised in that** the positioning element (26) is designed like an arm.

3. A system according to one of the preceding claims, **characterised in that** the holding means (28) is connected securely to the fastening element (24).

4. A system according to one of Claims 1 or 2, **characterised in that** the holding means (28) is connected detachably to the fastening element (24).

5. A system according to one of the preceding claims, **characterised in that** the adapter means (22) with the positioning element (26) is produced in an injection-moulding process.

6. A system according to one of the preceding claims, **characterised in that** the fastening element (24) is surrounded at least partially by a plastics material by means of the holding means (28).

7. A system according to one of the preceding claims, **characterised in that** a positioning element (26) is arranged in circumambient manner on the adapter means (22).

8. A system according to one of the preceding claims, **characterised in that** the adapter means (22) has at least three positioning elements (26).

9. A system according to one of the preceding claims, **characterised in that** the positioning element (26) is made from a hard plastics material.

10. A system according to one of the preceding claims, **characterised in that** the holding means (28) is formed on the positioning element (26) as a web-shaped projection (54), viewed in the circumferential direction of the collar region (14) of the bellows-type device (12).

11. A system according to one of Claims 1 to 9, **characterised in that** the holding element (28), viewed in the circumferential direction of the collar region (14) of the bellows-type device (12), has a U-shaped cross-section.

12. A system according to one of the preceding claims, **characterised in that** the adapter means (22) with the arm-like positioning element (26) engages around the collar region (14) of the bellows-type device (12) on the side opposite to the fold region (16).

13. A system according to one of the preceding claims, **characterised in that** the adapter means (22) is arranged at least partially between the collar region (14) of the bellows-type device (12) and the fastening element (24).

14. An adapter means (22) for fastening a bellows-type device (12) with at least one collar region (14) and one fold region (16) to a component (18) with at least one lobar region (20), **characterised in that** the adapter means (22) in a region opposite to the fold region (16) has at least one distanced positioning element (26), comprising at least one holding means (28) for the fastening element (24).

15. An adapter means (22) according to Claim 14, **characterised in that** the positioning element (26) is designed like an arm.

16. A adapter means (22) according to one of Claims 14 or 15, **characterised in that** the holding means (28) is connected securely to the fastening element (24).

17. An adapter means (22) according to one of Claims 14 to 16, **characterised in that** the holding means (28) is connected detachably to the fastening element (24).

18. An adapter means (22) according to one of Claims 14 to 17, **characterised in that** the adapter means (22) with the positioning element (26) is produced in an injection-moulding process.

19. An adapter means (22) according to one of Claims 14 to 18, **characterised in that** the fastening element (24) is surrounded at least partially by a plastics material by means of the holding means (28).

20. An adapter means (22) according to one of Claims 14 to 19, **characterised in that** a positioning element (26) is arranged in circumambient manner on the adapter means (22).

21. An adapter means (22) according to one of Claims 14 to 20, **characterised in that** the adapter means (22) has at least three positioning elements (26).

22. An adapter means (22) according to one of Claims 14 to 21, **characterised in that** the positioning element (26) is made from a plastics material.

23. An adapter means (22) according to one of Claims 14 to 22, **characterised in that** the holding means (28) is formed on the positioning element (26) as a web-shaped projection (54), viewed in the circumferential direction of the collar region (14) of the bellows-type device (12).

24. An adapter means (22) according to one of Claims 14 to 22, **characterised in that** the holding element (28), viewed in the circumferential direction of the collar region (14) of the bellows-type device (12), has a U-shaped cross-section.

25. An adapter means (22) according to one of Claims 14 to 24, **characterised in that** the adapter means (22) with the arm-like positioning element (26) engages around the collar region (14) of the bellows-type device (12) on the side opposite to the fold region (16).

26. An adapter means (22) according to one of Claims 14 to 25, **characterised in that** the adapter means (22) is arranged at least partially between the collar region (14) of the bellows-type device (12) and the fastening element (24).

27. A system according to one of Claims 1 to 13, **characterised in that** it furthermore comprises a bellows-type device (12) with at least one collar region (14) and one fold region (16).

## Revendications

1. Système (10) de fixation d'un soufflet (12) comprenant au moins une zone de collier (14) et une zone de plis (16) sur un composant (18) comprenant au moins une zone de lobe (20), comprenant au moins un moyen d'adaptation (22) et au moins un élément de fixation (24), **caractérisé en ce que** le moyen d'adaptation (22) présente, dans une zone opposée à la zone de plis (16), au moins un élément de positionnement écarté (26), comprenant au moins un moyen de maintien (28) pour l'élément de fixation (24).

2. Système selon la revendication 1, **caractérisé en ce que** l'élément de positionnement (26) est configuré en forme de bras.

3. Système selon l'une des revendications précédentes, **caractérisé en ce que** le moyen de maintien (28) est relié fixement à l'élément de fixation (24).

4. Système selon l'une des revendications 1 ou 2, **caractérisé en ce que** le moyen de maintien (28) est relié de façon amovible à l'élément de fixation (24).

5. Système selon l'une des revendications précédentes, **caractérisé en ce que** le moyen d'adaptation (22) avec l'élément de positionnement (26) est fabriqué dans le cadre d'un procédé de moulage par injection.

6. Système selon l'une des revendications précédentes, **caractérisé en ce que** l'élément de fixation (24) est au moins partiellement entouré par un matériau plastique à travers le moyen de maintien (28).

7. Système selon l'une des revendications précédentes, **caractérisé en ce qu'**un élément de positionnement (26) est disposé de manière périphérique sur le moyen d'adaptation (22).

8. Système selon l'une des revendications précédentes, **caractérisé en ce que** le moyen d'adaptation (22) présente au moins trois éléments de positionnement (26).

9. Système selon l'une des revendications précédentes, **caractérisé en ce que** l'élément de positionnement (26) est fabriqué à partir d'un matériau plastique dur.

10. Système selon l'une des revendications précédentes, **caractérisé en ce que** le moyen de maintien (28) est configuré sous forme de saillie en forme de traverse (54) dans la direction périphérique de la zone de collier (14) du soufflet (12), vu au niveau de l'élément de positionnement (26).

11. Système selon l'une des revendications 1 à 9, **caractérisé en ce que** l'élément de maintien (28) présente une section transversale en forme de U, vu dans la direction périphérique de la zone de collier (14) du soufflet (12).

12. Système selon l'une des revendications précédentes, **caractérisé en ce que** le moyen d'adaptation (22) avec l'élément de positionnement en forme de bras (26), du côté opposé à la zone de plis (16), entoure la zone de collier (14) du soufflet (12).

13. Système selon l'une des revendications précédentes, **caractérisé en ce que** le moyen d'adaptation (22) est disposé au moins partiellement entre la zone de collier (14) du soufflet (12) et l'élément de fixation (24).

14. Moyen d'adaptation (22) pour la fixation d'un soufflet (12) comprenant au moins une zone de collier (14) et une zone de plis (16) sur un composant (18) comprenant au moins une zone de lobe (20), **caractérisé en ce que** le moyen d'adaptation (22) présente, dans une zone opposée à la zone de plis (16), au moins un élément de positionnement écarté (26), comprenant au moins un moyen de maintien (28) pour l'élément de fixation (24).

15. Moyen d'adaptation (22) selon la revendication 14, **caractérisé en ce que** l'élément de positionnement (26) est configuré en forme de bras.

16. Moyen d'adaptation (22) selon l'une des revendications 14 ou 15, **caractérisé en ce que** le moyen de maintien (28) est relié fixement à l'élément de fixation (24).

17. Moyen d'adaptation (22) selon l'une des revendications 14 à 16, **caractérisé en ce que** le moyen de maintien (28) est relié de façon amovible à l'élément de fixation (24).

18. Moyen d'adaptation (22) selon l'une des revendications 14 à 17, **caractérisé en ce que** le moyen d'adaptation (22) avec l'élément de positionnement (26) est fabriqué dans le cadre d'un procédé de moulage par injection.

19. Moyen d'adaptation (22) selon l'une des revendications 14 à 18, **caractérisé en ce que** l'élément de fixation (24) est au moins partiellement entouré d'un matériau plastique à travers le moyen de maintien (28).

20. Moyen d'adaptation (22) selon l'une des revendications 14 à 19, **caractérisé en ce qu'**un élément de positionnement (26) est disposé de manière périphérique sur le moyen d'adaptation (22).

21. Moyen d'adaptation (22) selon l'une des revendications 14 à 20, **caractérisé en ce que** le moyen d'adaptation (22) présente au moins trois éléments de positionnement (26).

22. Moyen d'adaptation (22) selon l'une des revendications 14 à 21, **caractérisé en ce que** l'élément de positionnement (26) est fabriqué à partir d'un matériau plastique.

23. Moyen d'adaptation (22) selon l'une des revendications 14 à 22, **caractérisé en ce que** le moyen de maintien (28) est configuré sous forme de saillie en forme de traverse (54) dans la direction périphérique de la zone de collier (14) du soufflet (12), vu au niveau de l'élément de positionnement (26).

24. Moyen d'adaptation (22) selon l'une des revendications 14 à 22, **caractérisé en ce que** le moyen de maintien (28) présente une section transversale en forme de U, vu dans la direction périphérique de la zone de collier (14) du soufflet (12).

25. Moyen d'adaptation (22) selon l'une des revendications 14 à 24, **caractérisé en ce que** le moyen d'adaptation (22) avec l'élément de positionnement en forme de bras (26), du côté opposé à la zone de plis (16), entoure la zone de collier (14) du soufflet (12).

26. Moyen d'adaptation (22) selon l'une des revendications 14 à 25, **caractérisé en ce que** le moyen d'adaptation (22) est disposé au moins partiellement entre la zone de collier (14) du soufflet (12) et l'élément de fixation (24).

27. Système selon l'une des revendications 1 à 13, **caractérisé en ce que** celui-ci comprend en outre un soufflet (12) comprenant au moins une zone de collier (14) et une zone de plis (16).
